# EUROPEAN PATENT APPLICATION

(11) **EP 4 492 559 A1**
(43) Date of publication of application: **15.01.2025**
(21) Application number: 23766911.4
(22) Date of filing: 09.03.2023
(51) Int. Cl.: H01M 50/533, H01G 11/56, H01G 11/78, H01M 4/64, H01M 10/052, H01M 10/0562, H01M 50/102, H01M 50/109, H01M 50/148, H01M 50/202, H01M 50/244, H01M 50/50, H01M 50/548, H01M 50/559, H01M 50/56

(54) **ELECTROCHEMICAL ELEMENT**

(30) Priority: 09.03.2022 JP 2022035922; 14.06.2022 JP 2022095723
(71) Applicant: Maxell, Ltd., Kyoto 618-8525 (JP)
(72) Inventor: AOKI, Hiroyoshi, Otokuni-gun, Kyoto 618-8525 (JP); MASUDA, Shumpei, Otokuni-gun, Kyoto 618-8525 (JP); YAMAGUCHI, Koji, Otokuni-gun, Kyoto 618-8525 (JP); SHINTANI, Ayako, Otokuni-gun, Kyoto 618-8525 (JP); KAMIZORI, Haruki, Otokuni-gun, Kyoto 618-8525 (JP)
(74) Representative: Mewburn Ellis LLP
(86) International application number: PCT/JP2023/008960
(87) International publication number: WO 2023/171735

(57) **Abstract**

An electrochemical device is provided that is capable of maintaining good electrical connection and, at the same time, provides good sealability. An electrochemical device 1 includes: a case 10 including a recessed container 11 and a cap 12; a power generation element 20 sealed in the case 10 and including an electrode layer 21, an electrode layer 22 and a separation layer 23; and a conductive plate 30 positioned between the power generation element 20 and the cap 12. The electrode layer 21 is electrically connected to a conductive path running to the outside (conductor 113). The electrode layer 22 is electrically connected, via the conductive plate 30, to a conductive path running to the outside (conductor 114). The conductive plate 30 has an edge to be fixed to the side wall 112 of the recessed container 111. The power generation element 20 is pushed by the conductive plate 30 toward the bottom 11 of the recessed container 111. A clearance is provided between the conductive plate 30 and cap 12.

## Description

### TECHNICAL FIELD

The present disclosure relates to an electrochemical device with a power generation element sealed in a case.

### BACKGROUND ART

Various conventional batteries have been disclosed with a power generation element housed in the interior space defined by a recessed container and a cap that covers the opening of the recessed container.

JP 2012-69508 A (Patent Document 1) discloses an electrochemical cell with stable electrochemical characteristics. The electrochemical cell includes a hermetic container. The hermetic container includes a base member and a lid member. A housing space is formed between these two members for housing an electrochemical element. An elastic member is positioned between the lid member and electrochemical element to press the electrochemical element. Patent Document 1 discloses a plate spring bent in a V-shape as seen in cross-sectional view to serve as an elastic member, or a diaphragm -shaped spring shaped to have a concave surface that is warped as it goes from the center toward the outer edge.

JP 2006-12792 A (Patent Document 2) discloses a cell case. The cell case includes a base made of ceramics and provided with a recess in a central portion of the upper surface, and a cap to be joined thereto to cover the recess. The cell case houses a cell element in its interior. The cap of the cell case includes a protrusion located on its central portion, the entire protrusion adapted to protrude into the recess, and a curved portion located between the protrusion and an outer peripheral portion that surrounds the projection and is to be joined to the base, such that the cell element may be pushed from above to fix it.

WO 2022/030424 A1 (Patent Document 3) discloses a cell package and a cell module. The cell package includes an insulating substrate made of ceramics and provided with a recess in a central portion of its first surface, a frame located on the first surface to surround the recess, and a cap that caps the frame. The cell module is composed of the cell package and a cell housed in its interior. A metallic conductive sheet is provided between the cap of the cell package and the cell to push the cell to maintain electrical connection to the cell. The conductive sheet is joined to a second electrode provided on the first surface, where a conductive joining material formed from a conductive adhesive, for example, is positioned therebetween such that a second external electrode that constitutes an external terminal is electrically connected to one of the electrodes of the cell.

### PRIOR ART DOCUMENTS

### PATENT DOCUMENTS

Patent Document 1: JP 2012-69508 A
Patent Document 2: JP 2006-12792 A
Patent Document 3: WO 2022/030424 A1

### SUMMARY OF THE INVENTION

The V-shape-bent plate spring in the electrochemical cell of Patent Document 1 is not in stable contact with the electrochemical element and thus may be displaced in position by vibration, for example. Further, the diaphragm -shaped spring shaped to have a concave surface may also be displaced in position by vibration, for example, and, in addition, the area of the central portion in contact with the electrochemical element is small, potentially leading to unstable electrical connection.

In the cell case of Patent Document 2, during joining of the cap to the base, the cell element to be in abutment with the cap must be joined while being pushed by the cap, making it difficult to perform uniform joining across the entire circumference, resulting in insufficiently joined locations, potentially decreasing sealability. Furthermore, charging and discharging cause changes in the volume of the cell element, which may cause the cap to deform.

For the cell module of Patent Document 3, illustrative examples of conductive joining materials listed include solder and conductive adhesive; the use of solder requires the step of soldering; in addition, controlling the amount of solder present between the conductive sheet and second electrode is difficult, such that the joining may be insufficient or the flat surfaces of the conductive sheet and of the cell may not completely adhere to each other, which may increase electrical resistance. Further, if a conductive adhesive is to be used, an attempt to increase conductivity reduces bond strength such that vibrations and/or changes in the volume of the cell change joining conditions, potentially increasing electrical resistance.

In view of this, a problem to be solved by the present disclosure is to provide an electrochemical device capable of maintaining good electrical connection and, at the same time, providing good sealability.

To solve the above-identified problem, the present disclosure provides the following arrangement: An electrochemical device according to the present disclosure includes: a case including a recessed container having a bottom and a side wall, and a cap adapted to cover an opening of the recessed container; a power generation element sealed in the case and including a first electrode layer located adjacent to the bottom, a second electrode layer located adjacent to the cap, and a separation layer located between the first electrode layer and the second electrode layer; and a conductive plate positioned between the power generation element and the cap. The recessed container or the cap of the case includes a first conductive path corresponding to the first electrode layer to run from an inside to an outside, and a conductive path corresponding to the second electrode layer to run from the inside to the outside. The first electrode layer is electrically connected to the first conductive path. The second electrode layer is electrically connected to the second conductive path via the conductive plate. The conductive plate has an edge to be fixed to a side wall of the recessed container. The power generation element is pushed by the conductive plate toward the bottom of the recessed container.

The electrochemical device according to the present disclosure will maintain good electrical connection and, at the same time, achieve good sealability.

### BRIEF DESCRIPTION OF THE DRAWINGS

[FIG. 1] FIG. 1 is a cross-sectional view of an electrochemical device according to a first embodiment.
[FIG. 2] FIG. 2 is an external perspective view of the recessed container of the electrochemical device shown in FIG. 1.
[FIG. 3] FIG. 3 is an external perspective view of another recessed container for the electrochemical device.
[FIG. 4] FIG. 4 is a plan view of the electrochemical device shown in FIG. 1 (excluding the cap and conductive plate).
[FIG. 5] FIG. 5 is a plan view of the conductive plate of the electrochemical device shown in FIG. 1.
[FIG. 6] FIG. 6 is a cross-sectional view of an electrochemical device according to a second embodiment.
[FIG. 7] FIG. 7 is a cross-sectional view of an electrochemical device according to a third embodiment.
[FIG. 8] FIG. 8 is an external perspective view of another recessed container for the electrochemical device.

### EMBODIMENTS FOR CARRYING OUT THE INVENTION

### (Arrangement 1)

An electrochemical device according to an embodiment of the present disclosure includes: a case including a recessed container having a bottom and a side wall, and a cap adapted to cover an opening of the recessed container; a power generation element sealed in the case and including a first electrode layer located adjacent to the bottom, a second electrode layer located adjacent to the cap, and a separation layer located between the first electrode layer and the second electrode layer; and a conductive plate positioned between the power generation element and the cap.

As used herein, "power generation element" means a component capable of supplying electric power to an external entity by means of the first and second electrode layers. The power generation element may be, for example, a battery such as a lithium-ion secondary battery or an all-solid-state battery; alternatively, the power generation element may be a capacitor, such as an electric double-layer capacitor or a lithium-ion capacitor.

The first and second electrode layers of the power generation element are electrically separated from each other by a separation layer. The separation layer used may be a solid electrolyte layer or a separator typically used in a battery or a capacitor.

The recessed container or the cap of the case includes a first conductive path corresponding to the first electrode layer to run from an inside to an outside, and a second conductive path corresponding to the second electrode layer to run from the inside to the outside. The first electrode layer is electrically connected to the first conductive path. The second electrode layer is electrically connected to the second conductive path via the conductive plate.

Further, the conductive plate has an edge to be fixed to a side wall of the recessed container. The power generation element is pushed by the conductive plate toward the bottom of the recessed container.

As the conductive plate pushes the power generation element toward the bottom of the recessed container, the conductive plate will be in more stable contact with the power generation element, even upon a change in the volume of the power generation element. Furthermore, as the edge of the conductive plate is fixed to the side wall of the recessed container, no positional displacement of the conductive plate will occur due to vibration, for example, and thus the sealed battery will be capable of maintaining good electrical connection. Further, the cap is not in abutment with the power generation element; thus, when the cap is being joined to the upper end surface of the side wall of the recessed container, the cap will not be affected by variations in the thickness of the power generation element, thereby improving the sealability of the case.

Moreover, a clearance is provided between the conductive plate and the cap. Thus, even when a change in the volume of the power generation element pushes the conductive plate toward the cap, the conductive plate will not contact the cap; thus, deformation of the cap will be prevented. Further, the cap and recessed container may be bonded together by adhesive, or may be fixed by welding them together with a seal ring placed therebetween. As a clearance is provided between the cap and conductive plate, the cap and recessed container may be welded while the weld heat is prevented from affecting the power generation element. Further, as the cap and conductive plate are not in contact with each other, it will not be necessary, during joining of the cap to the upper end surface of the recessed container, to push the power generation element and/or conductive plate using the cap, thereby further improving the sealability of the case. Furthermore, even when volume expansion of the power generation element causes deformation of the conductive plate toward the cap, the cap will not be pushed by the conductive plate; thus, deformation of the cap will be prevented during charge and discharge.

### (Arrangement 2)

Starting from the electrochemical device of Arrangement 1, the conductive plate may include: the edge to be fixed to the side wall of the recessed container; a planar bottom portion having a flat surface facing the power generation element and adapted to push the power generation element toward the bottom of the recessed container; and a stepped portion displaced from the planar bottom portion in a thickness direction. The thickness direction of the conductive plate may also be referred to as the direction perpendicular to the planar bottom portion. The edge of the conductive plate is configured to be fixable to the side wall of the recessed container. As the edge of the conductive plate is fixed to the side wall of the recessed container, the planar bottom portion of the conductive plate will be able to push the power generation element toward the bottom of the recessed container. In this state, as discussed above, the conductive plate electrically connects the second electrode layer with the second conductive path.

At this moment, the planar bottom portion of the conductive plate that has a flat surface pushes the power generation element with a larger area toward the bottom of the recessed container such that, even when the volume of the power generation element changes, the conductive plate will be in more stable contact with the power generation element. Furthermore, damage to the electrode layer during expansion of the power generation element will be prevented, thereby maintaining good electrical connection. Moreover, the cap will not be in abutment with the conductive plate and/or power generation element, which means that, during joining of the cap to the upper end surface of the side wall of the recessed container, uniform joining will be possible across the entire circumference, thereby improving the sealability of the case.

In the conductive plate, a stepped portion displaced in the thickness direction is provided around the planar bottom portion. Thus, the conductive plate can function as a spring more easily and thus its elasticity can cause the planar bottom portion to push the power generation element more easily. Further, the overall thickness will be reduced than with a diaphragm -shaped conductive plate. Furthermore, the position of the edge of the conductive plate, i.e., the supported portions, discussed further below, can be freely set along the height direction (i.e., thickness direction of the conductive plate): for example, the position of the edge of the conductive plate, at which the plate is fixed to the inner peripheral surface of the side wall of the recessed container, may be closer to the bottom of the recessed container than the planar bottom portion of the conductive plate is; as such, even if a clearance is formed between the cap and conductive plate, it will be possible to prevent this from increasing the distance between the cap and the planar bottom portion of the conductive plate and, consequently, the gap between the cap and power generation element will be limited, thereby preventing that clearance from impeding an increase in capacity.

### (Arrangement 3)

Starting from any one of the electrochemical devices of Arrangements 1 and 2, the recessed container may include a plurality of supports on the side wall. The edge of the conductive plate may include a plurality of supported portions corresponding to the respective supports. Each of the supported portions may be fixed to the associated support.

For example, the edge of the conductive plate may be fixed to the side wall of the recessed container in the following manner: A support is provided on the inner peripheral surface of the side wall of the recessed container to allow the edge of the conductive plate to be locked thereto. Further, a supported portion is provided on the edge of the conductive plate to be locked to the support. To fix the conductive plate in a reliable manner, it is preferable to provide a plurality of supports on the inner peripheral surface of the side wall of the recessed container, and it is preferable to provide, on the edge of the conductive plate, a plurality of supported portions corresponding, in position, to the respective supports. As each supported portion is locked to and supported by the associated support, the edge of the conductive plate is fixed to the side wall and, at the same time, the planar bottom portion of the conductive plate will be able to push the power generation element toward the bottom of the recessed container. This will enable maintaining better electrical connection.

### (Arrangement 4)

Starting from the electrochemical device of Arrangement 3, each of the supports of the recessed container may be a lug formed on the inner peripheral surface of the side wall. Each of the supported portions of the conductive plate may be a locking piece extending from the edge of the conductive plate to be capable of being locked to a lower surface of the associated lug.

### (Arrangement 5)

Starting from any one of the electrochemical devices of Arrangements 1 to 4, the separation layer may be a solid electrolyte layer containing a sulfide-based solid electrolyte.

### (Arrangement 6)

Starting from any one of the electrochemical devices of Arrangements 1 to 5, the electrochemical device may further include a conductive sheet located between the planar bottom portion of the conductive plate and the power generation element. In the electrochemical device, for example, a conductive sheet such as a metallic foil or porous material, or a carbon sheet or a non-woven fabric, or a conductive film such as a coating or vapor-deposited film containing a conductive material such as metal or carbon, may be positioned between the planar bottom portion of the conductive plate and the power generation element. This will reduce contact resistance compared with implementations where the conductive plate and the power generation element are in direct contact, thereby achieving even better electrical connection. To facilitate a reduction of contact resistance, it is preferable to use a conductive sheet or conductive film that can deform more easily and is more flexible than the conductive plate.

An electrochemical device may be constructed such that its power generation element is encapsulated in an exterior member other than the case, such as a metallic container, and then encapsulated in the interior of the case such that the power generation element is double-sealed by the case and exterior member. In other words, an electrochemical device may be constructed in such a manner that a flat element formed by encapsulating a power generation element in an exterior member is sealed in a case.

### (Arrangement 7)

Accordingly, an electrochemical device according to another aspect includes: a case including a recessed container having a bottom and a side wall, and a cap adapted to cover an opening of the recessed container; a flat element sealed in the case and including an exterior member having a first electrode terminal located adjacent to the bottom and a second electrode terminal located adjacent to the cap, and a power generation element encapsulated in an interior of the exterior member and having a first electrode layer, a second electrode layer and a separation layer located between the first electrode layer and the second electrode layer; and a conductive plate positioned between the flat element and the cap. The first electrode terminal is electrically connected to a first conductive path running from an inside of the case to an outside of the case. The second electrode terminal is electrically connected, via the conductive plate, to a second conductive path running from the inside of the case to the outside of the case. The conductive plate has an edge to be fixed to the side wall of the recessed container. The flat element is pushed by the conductive plate toward the bottom of the recessed container. A clearance is provided between the conductive plate and the cap. This will enable maintaining good electrical connection even when a flat element is housed in the interior space of the case.

### (Arrangement 8)

Starting from the electrochemical device of Arrangement 7, the conductive plate may include: the edge to be fixed to the side wall of the recessed container; a planar bottom portion having a flat surface facing the flat element and adapted to push the flat element toward the bottom of the recessed container; and a stepped portion displaced from the planar bottom portion in a thickness direction. Thus, the electrochemical device of Arrangement 8 will produce generally the same effects as the electrochemical device of Arrangement 2.

### (Arrangement 9)

Starting from any one of the electrochemical devices of Arrangements 7 and 8, the recessed container may include a plurality of supports on the side wall. The edge of the conductive plate may include a plurality of supported portions corresponding to the respective supports. Each of the supported portions may be fixed to the associated support. Thus, the electrochemical device of Arrangement 9 will produce generally the same effects as the electrochemical device of Arrangement 3.

### (Arrangement 10)

Starting from the electrochemical device of Arrangement 9, each of the supports of the recessed container may be a lug formed on the inner peripheral surface of the side wall. Each of the supported portions of the conductive plate may be a locking piece extending from the edge of the conductive plate to be capable of being locked to a lower surface of the associated lug.

### (Arrangement 11)

Starting from any one of the electrochemical devices of Arrangements 7 to 10, the separation layer may be a solid electrolyte layer containing a sulfide-based solid electrolyte. The flat element may be an all-solid-state battery.

### (Arrangement 12)

Starting from any one of the electrochemical devices of Arrangements 7 to 11, the electrochemical device may further include a conductive sheet located between the planar bottom portion of the conductive plate and the flat element. Thus, the electrochemical device of Arrangement 12 will produce generally the same effects as the electrochemical device of Arrangement 6.

The recessed container is not limited to any particular material, and examples include resin, glass (e.g., borosilicate glass and glass ceramics), metal, ceramics, and various other materials. A composite material with ceramic and/or glass powder dispersed in a resin may also be used. If the recessed container is formed from a metal material, to ensure that the power generation element is insulated from the recessed container or a flat element is insulated from the recessed container, it is desirable that the inner surface of the bottom of the recessed container and the inner peripheral surface of the side wall be coated with an insulator, such as a resin material or glass.

### (First Embodiment)

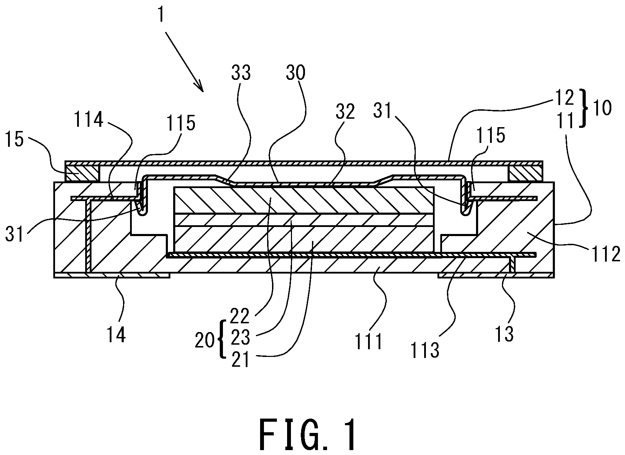

Now, a first embodiment of the present disclosure will be specifically described in connection with an exemplary implementation where the electrochemical device is an all-solid-state battery, with reference to FIGS. 1 to 5. First, as shown in FIG. 1, the electrochemical device 1 includes a case 10, a power generation element 20 housed in the case 10, and a conductive plate 30 contained in the case 10.

The case 10 includes a recessed container 11, a cap 12, an external terminal 13 and an external terminal 14.

The recessed container 11 is made of ceramics. The recessed container 11 includes a rectangular bottom 111 and a side wall 112 having the shape of a rectangular tube with a columnar space for housing the power generation element 20, the outer periphery of the bottom 111 and the side wall being continuously formed. As seen in longitudinal cross-sectional view, the side wall 112 extends generally perpendicular to the bottom 111. A conductor 113 is provided inside the bottom 111. The conductor 113 is provided between the power generation element 20 and bottom 111 to extend along them for conductive connection with the power generation element 20, thereby providing a conductive path for the electrode layer 21. A conductor 114 is provided within the side wall 112. As shown in FIG. 1, some portions of the conductor 114 are exposed at the inner peripheral surface of the side wall 112, at the lower surfaces and side surfaces of supports 115, discussed further below, thereby providing a conductive path for the electrode layer 22. A method of manufacturing the recessed container 11 will be described further below. The recessed container 11 is not limited to ceramic, and may be formed from an insulating material such as a synthetic resin. The recessed container 11 is not limited to a rectangular shape as seen in plan view, and may be circular, elliptic, or polygonal. The recessed container, having an interior space for housing the power generation element 20, is not limited to a cylindrical shape, and may have the shape of a polygonal tube, such as a quadrangular tube, depending on the shape of the power generation element 20. Alternatively, the conductor 114 may be located on the inner surface of the side wall 112, rather than within the side wall 112, and may further extend through within the bottom 111 to be in conduction with the external terminal 14. In such implementations, to prevent the outer peripheral surface of the power generation element 20 and the conductor 114 from contacting each other, it is desirable that an insulating layer be provided between the outer peripheral surface of the power generation element 20 and the conductor 114, such as on the inner surface of the conductor 114.

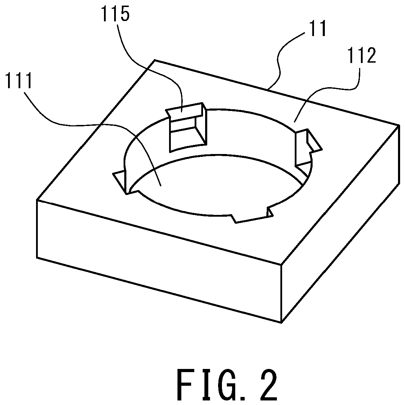

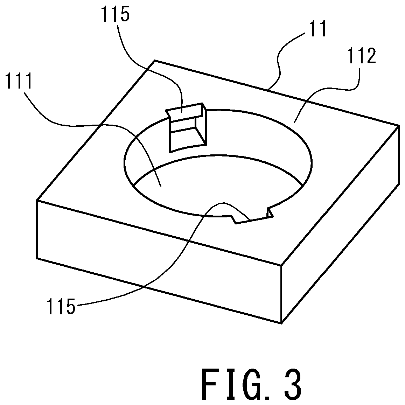

The side wall 112 includes a plurality of supports 115 that support the conductive plate 30. According to the present embodiment, the supports 115 are lugs located at the upper end of the inner peripheral surface of the side wall 112 and extending radially inward. More specifically, as shown in FIG. 2, the supports 115 are ceilings for a plurality of indentations formed in the inner peripheral surface of the side wall 112 and extending radially outward. Thus, the supports 115 extend radially inward. The lower surface of each support 115, that is, the lower surface of each ceiling, is capable of locking and supporting a supported portion 31, discussed further below, on the conductive plate 30. Further, although four supports 115 are provided in the present embodiment, supports are not limited to any number; for example, if two supported portions 31 are provided on the conductive plate 30 discussed further below, two supports 115 may be provided at locations corresponding to the supported portions 31, as shown in FIG. 3.

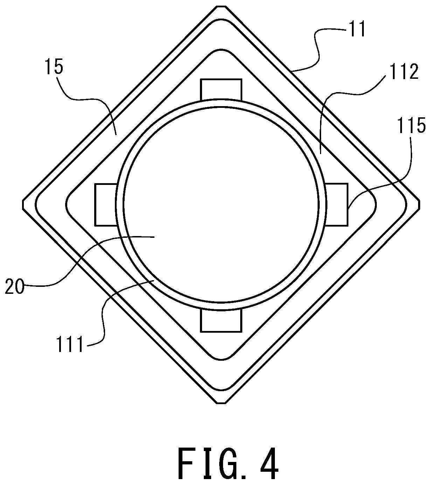

The cap 12 is a rectangular, thin metallic plate covering the opening of the recessed container 11. As shown in FIGS. 1 and 4, the cap 12 is joined (i.e., seam-welded) to the recessed container 11 by a seal ring 15 having the shape of a rectangular frame and positioned between the lower surface of the outer peripheral edge of the cap and the upper end of the recessed container 11. Thus, the interior space of the case 10 is completely hermetic. In view of effects on the power generation element 10, the interior space of the case 10 is preferably a vacuum atmosphere or inert-gas atmosphere, such as nitrogen. The cap 12 is not limited to a thin metallic plate, and is only required to be capable of covering the opening of the recessed container 11. The cap 12 is not limited to a rectangular shape and may be varied depending on the shape of the recessed container 11 as seen in plan view, and may be circular, elliptical or polygonal, for example. Further, the cap 12 may have other shapes than a flat plate. In some implementations, the cap 12 may be bonded to the recessed container 11 with an adhesive, and the joining of the cap 12 to the recessed container 11 is not limited to any particular method.

The external terminal 13 is located on the outer surface of the bottom 111 of the recessed container 11. The external terminal 13 is electrically connected to the electrode layer 21, discussed further below, via the conductor 113. The electrode layer 21 functions as a cathode layer, as discussed below. Thus, the conductor 113 provides a conductive path that provides conduction between the external terminal 13 and cathode layer, and the external terminal 13 functions as a cathode terminal.

The external terminal 14 is located on the outer surface of the bottom 111 of the recessed container 11, separated from the external terminal 13. The external terminal 14 is electrically connected to the supported portions 31 of the conductive plate 30, discussed further below, via the conductor 114. As discussed further below, the conductive plate 30 is electrically connected to the electrode layer 22 which functions as an anode layer. Thus, the conductor 114 provides a conductive path that provides conduction between the external terminal 14 and anode layer, and the conductive plate 30 provides a connection terminal that provides conduction between this conductive path and electrode layer 22, and thus the external terminal 14 functions as an anode terminal. The external terminals 13 and 14 are not limited to the above-described positioning, and may be positioned on the outer surface of the side wall 112 of the recessed container 11; alternatively, the cap 12 may function as the conductor 114 and the external terminal 14 may be provided on the outer surface of the cap 12. Positioning these two terminals on the outer surface of the bottom 111 of the recessed container 11 so as to be separated by a predetermined distance facilitates mounting on the surface of the circuit board.

A method of manufacturing the recessed container 11 will be described below. First, a metal paste is applied to a ceramic greensheet through printing to form a printed pattern that is to provide the conductors 113 and 114. Next, a plurality of such greensheets with printed patterns are laminated and baked. Laminating a plurality of greensheets with different shapes results in the above-described supports 115. In this way, a recessed container 11 is fabricated that contains conductors 113 and 114 and includes such supports 115 as described above on the inner peripheral surface of the side wall 112. The manufacturing is not limited to this method, and any method may be used that can form supports 115 on the inner peripheral surface of the side wall 112. The external terminals 13 and 14 may be formed by this printed pattern of metal paste.

The power generation element 20 includes a laminate including an electrode layer (cathode layer) 21, an electrode layer (anode layer) 22 and a solid electrolyte layer 23 laminated together. The solid electrolyte layer 23 is positioned between the electrode layers 21 and 22 to provide a separation layer. In other words, according to the present embodiment, the separation layer is constituted by the solid electrolyte layer 23. The power generation element 20 is columnar in shape. The power generation element 20 is laminated in such a manner that, from adjacent to the bottom 111 of the recessed container 11 (i.e., from the bottom in the drawing), the electrode layer 21, the solid electrolyte layer 23, and the electrode layer 22 are stacked in this order. In other words, the power generation element 20 is positioned such that one end thereof, i.e., the electrode layer 21, is located adjacent to the bottom 111 of the recessed container 11 and the other end, i.e., the electrode layer 22, is located adjacent to the cap 12, and the element is housed in the interior space of the case 10. The power generation element 20 is not limited to a columnar shape, and may be varied to have the shape of a rectangular parallelepiped or a prism, for example. Further, the power generation element 20 may include a plurality of laminates. The plurality of laminates may be stacked upon one another so as to be connected in series.

The electrode layer 21 is a cathode pellet obtained by placing a cathode mixture into a mold with a diameter of 7.45 mm to form it into a columnar shape, the cathode mixture containing a cathode active material constituted by lithium cobalt oxide, a sulfide-based solid electrolyte, and a conductive aid constituted by graphene in the ratio of 65:30:5 by mass. The electrode layer 21 is not limited to any particular cathode active material and only required to be able to function as the cathode layer of the power generation element 20, and may be lithium nickel oxide, lithium manganese oxide, lithium-nickel-cobalt-manganese complex oxide, olivine-type complex oxide, for example, or may be any suitable mixture thereof. The other constituent materials and their proportions are not limited to any particular materials/proportions. The size and shape of the electrode layer 231 are not limited to a columnar shape, and may be varied depending on the size and shape of the electrochemical device 1.

The electrode layer 22 is an anode pellet obtained by forming an anode mixture into a columnar shape, the anode mixture containing an anode active material used in a lithium-ion secondary battery constituted by LTO (Li₄Ti₅O₁₂, i.e., lithium titanate), a sulfide-based solid electrolyte, and graphene in the ratio of 50:40:10 by weight. The electrode layer 22 is not limited to any particular anode active material and only required to be able to function as the anode layer of the power generation element 20, and may be a metallic lithium or a lithium alloy, or a carbon material such as graphite or low-crystallinity carbon, or an oxide such as SiO, for example, or may be any suitable mixture thereof. The other constituent materials and their proportions are not limited to any particular materials/proportions. The size and shape of the electrode layer 22 are not limited to a columnar shape, and may be varied depending on the size and shape of the electrochemical device 1.

The solid electrolyte layer 23 contains a sulfide-based solid electrolyte. The solid electrolyte layer 23 is columnar in shape. The solid electrolytes contained in the electrode layer 21, electrode layer 22 and solid electrolyte layer 23 are not limited to any particular ones; preferable ones include sulfide-based solid electrolytes, especially argyrodite-type sulfide-based solid electrolytes to provide ion conductivity. If sulfide-based solid electrolytes are used, it is preferable that the surface of the cathode active material is coated with a lithium-ion conductive material such as a niobium oxide to prevent reaction with the cathode active material. The solid electrolytes contained in the solid electrolyte layer 23, electrode layer 21 and electrode layer 22 may be hydride-based solid electrolytes or oxide-based solid electrolytes, for example. The size and shape of the solid electrolyte layer 23 are not limited to a columnar shape, and may be varied depending on the size and shape of the electrochemical device 1.

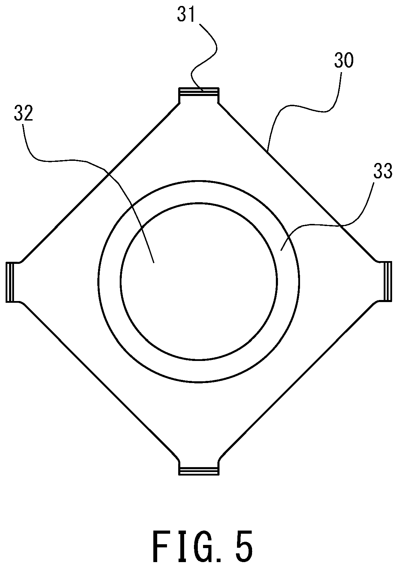

As shown in FIGS. 1 and 5, the conductive plate 30 is a metallic plate that is rectangular in shape in plan view and placed on the opening of the recessed container 11 of the case 10. The conductive plate 30 includes a plurality of supported portions 31 corresponding in position to the supports 115 described above. According to the present embodiment, the supported portions 31 are hook-shaped locking pieces locked to the respective supports 115 described above, that is, to the lower surfaces of the respective ceilings. More specifically, each supported portion 31 extends from an edge of the conductive plate 30 toward the associated support 115 described above (i.e., downward in FIG. 1). The supported portion 31 includes a tip portion sharply bent back toward the lower surface of the associated support 115, i.e., the associated ceiling. The tip of the supported portion 31 is in contact with the conductor 114 exposed at the lower surface and side surface of the ceiling, as discussed above. Thus, the conductive plate 30 functions as a current collector and, at the same time, functions as a connection terminal that electrically connects the electrode layer 22 with the conductive path connected to the external terminal 14. The conductive plate 30 is supported by the supports 115 provided on the inner peripheral surface of the recessed container 11 and covers a portion of the opening of the recessed container 11. The surface area of the conductive plate 30 as measured in plan view is smaller than the surface area of the opening of the recessed container 11.

As shown in FIG. 1, the conductive plate 30, when fixed to the side wall 112 of the recessed container 11, pushes the power generation element 20 toward the bottom 111 of the recessed container 11. The conductive plate 30 includes a recessed portion recessed toward the associated end of the power generation element, 20, i.e., the electrode layer 22, positioned to contact the upper surface of the electrode layer 22. The planar bottom portion 32 of the recessed portion is flat in shape so as to be able to push the power generation element 20 with a larger area. Further, a stepped portion 33 displaced in the thickness direction is provided to surround the planar bottom portion 32 of the recessed portion. The stepped portion 33 is a peripheral wall represented by a truncated cone with a diameter that gradually decreases toward the power generation element 20. As shown in FIG. 1, the planar bottom portion 32 of the recessed portion faces the electrode layer 22 and is in contact with the upper surface of the electrode layer 22. Thus, the planar bottom portion 32, which has the shape of a flat plane, pushes the electrode layer 22 with a large area to prevent damage to the electrode layer 22 during expansion of the power generation element 20. Furthermore, a larger area of contact between the conductive plate 30 and power generation element 20 is provided to establish a conductive connection between the conductive plate 30 and power generation element 20 in a larger area, thereby maintaining good electrical connection. Moreover, providing a stepped portion 33 enables a reduction in the overall thickness of the conductive plate 30. Further, the position of the edge of the conductive plate 30, and thus the supported portions 31, may be freely set along the height direction (i.e., thickness direction of the conductive plate), which will enable preventing the distance between the cap 12 and the planar bottom portion 32 of the conductive plate 30 from increasing even if a clearance is formed between the cap 12 and conductive plate 30. This will enable preventing the gap between the cap 12 and power generation element 20 from increasing, thereby enabling an increase in the capacity of the electrochemical device 1. It will be understood that the thickness direction is shown in FIG. 1 as the top-bottom direction (i.e., the height direction of the electrochemical device 1), and can also be referred to as the direction perpendicular to the planar bottom portion 32 in the drawings. It will be understood that the entire planar bottom portion 32 need not be flat, and some portions may have other shapes than a flat plane. Nevertheless, the larger the proportion of the flat plane in the planar bottom portion 32, the larger the area of contact with the electrode layer 22, reducing contact resistance; thus, preferably a large proportion of the flat plane is provided, and yet more preferably the entire planar bottom portion 32 is constituted by a flat plane.

Examples of metals forming the conductive plate 30 include nickel, iron, copper, chromium, cobalt, titanium, aluminum, and alloys thereof; to facilitate functioning as a plate spring, stainless steels for springs are preferably used, such as SUS301-CSP, SUS304-CSP, SUS316-CSP, SUS420J2-CSP, SUS631-CSP and SUS632J1-CSP.

To ensure that the pressing force of the conductive plate 30 against the power generation element 20 is at a predetermined level or higher, the thickness of the conductive plate is preferably not smaller than 0.05 mm, more preferably not smaller than 0.07 mm, and particularly preferably not smaller than 0.1 mm. On the other hand, to prevent an excessively large thickness of the conductive plate 30 from requiring increased housing capacity of the case, and to facilitate deformation of the conductive plate 30 to facilitate locking to the side wall 112, the thickness of the conductive plate 30 is preferably not larger than 0.5 mm, more preferably not larger than 0.4 mm, and particularly preferably not larger than 0.3 mm.

To reduce contact resistance, the area of the planar bottom portion of the conductive plate is preferably not smaller than 10 % of the area, as seen in plan view, of the electrode 22 of the power generation element that faces the conductive plate, more preferably not smaller than 30 %, particularly preferably not smaller than 50 %, and most preferably not smaller than 60 %. On the other hand, to reduce the radial gap around the power generation element 20, the area of the planar bottom portion 32 of the conductive plate 30 is preferably not larger than 100 % of the area, as seen in plan view, of the electrode layer 22 of the power generation element 20 that faces the conductive plate, more preferably not larger than 95 %, particularly preferably not larger than 90 %, and most preferably not larger than 85 %. The shape of the planar bottom portion 32 of the conductive plate 30 need not be a completely flat plane, and may be a plane with irregularities, such as an embossed one, to reduce the contact resistance with the power generation element 20.

After the power generation element 20 is placed inside the recessed container 11, the conductive plate 30 is laid on the upper surface of the power generation element 20. With the conductive plate 30 laid on the upper surface of the power generation element 20, the tip of each supported portion 31 is positioned between the upper surface of the power generation element 20 and the associated support 115, i.e., the lower surface of the associated ceiling as determined along the axial direction of the power generation element 20 (i.e., top-bottom direction in FIG. 1). Then, the supported portion 31 of the conductive plate 30 is pushed toward the bottom 111 of the recessed container 11 and, in that state, moved so as to be supported by the support 115. More specifically, the tip of each supported portion 31 is locked to the associated support 115, i.e., the lower surface of the associated ceiling. As the supported portions 31 are pushed downward, the conductive plate 30, in contact with the power generation element 20, is warped by the electrode layer 22 in a direction away from the electrode layer. The conductive plate 30 uses its elastic force to push the power generation element 20 toward the bottom 111 of the recessed container 11. Thus, the conductive plate 30 is in more stable contact with the power generation element 20 without a positional displacement due to vibration, for example, thereby maintaining good electrical connection without a positional displacement due to vibration, for example. At this moment, the above-described recessed portion reduces warping of the flat planar bottom portion 32, thereby maintaining better electrical connection. Thus, the conductive plate 30 is not limited to any particular construction, and is only required, with its edge supported by the inner peripheral surface of the side wall 112, to use its elastic force to push the power generation element 20 toward the bottom 111 of the recessed container 11.

A clearance is provided between the conductive plate 30 and cap 12. In other words, the conductive plate 30 and cap 12 are not in contact with each other. Thus, when a change in the volume of the power generation element 20 pushes the conductive plate 30 toward the cap 12, the cap 12 is prevented from deforming. Further, the cap 12 and recessed container 11 are welded together with a seal ring 15 provided therebetween, as discussed above. As a clearance is provided between the conductive plate 30 and cap 12, weld heat is prevented from affecting the power generation element 20. Furthermore, since the conductive plate 30 and cap 12 are not in contact with each other, the joining of the cap 12 to the top end surface of the side wall 112 of the recessed container 11 is not affected by a change in the volume of the power generation element 20, thereby further improving the sealability of the case 10.

### (Second Embodiment)

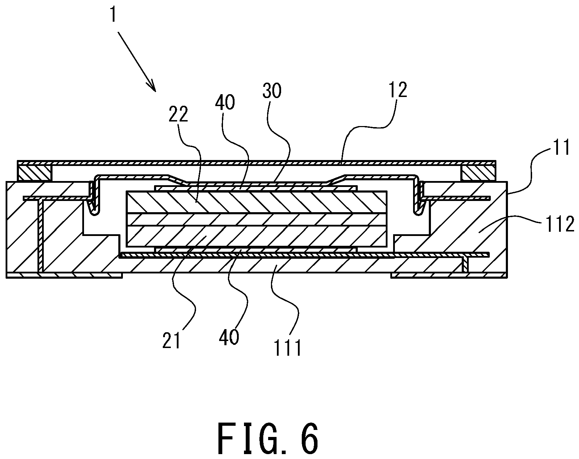

Next, an electrochemical device 1 of a second embodiment will be specifically described with reference to FIG. 6. In connection with the electrochemical device 1 of the present embodiment, the same elements as for the electrochemical device 1 of the first embodiment will basically not be described and only the elements that represent differences from the electrochemical device 1 of the first embodiment will be described.

The electrochemical device 1 of the present embodiment includes a conductive sheet 40 between the electrode layer 22 and conductive plate 30. In the present embodiment, the conductive sheet 40 is a conductive carbon sheet formed from expanded graphite, that is, a graphite sheet. The graphite sheet is produced in the following manner: First, natural graphite is acidized to produce acidized graphite, and its particles are heated. This causes acids present between the layers of the acidized graphite to vaporize to cause the acidized graphite to foam and thus expand. This expanded graphite is formed into a felt shape, and then rolled in a rolling mill with rollers to form a sheet. A circular portion is cut out of this sheet of expanded graphite to produce a conductive sheet 40. As discussed above, expanded graphite is formed by acids in acidized graphite vaporizing such that the acidized graphite foams. Thus, the resulting graphite sheet is porous. As such, the graphite sheet provides not only conductivity, a feature provided by the graphite itself, but also flexibility, a feature not provided by conventional graphite products. The manufacture of the graphite sheet is not limited to this method and the graphite sheet may be formed from materials other than expanded graphite, and may be produced by any method.

The apparent density of the graphite sheet is preferably not lower than 0.3 g/cm³, and more preferably not lower than 0.7 g/cm³; it is preferably not higher than 1.5 g/cm³, and more preferably not higher than 1.3 g/cm³. This is in view of the fact that if the apparent density of the graphite sheet is too low, the graphite sheet can easily be damaged; if the apparent density is too high, flexibility decreases. These ranges of apparent density are not only applicable to a graphite sheet, but also a conductive sheet 40 formed from other materials such as conductive tape.

The thickness of the graphite sheet is preferably not smaller than 0.05 mm, and more preferably not smaller than 0.07 mm; it is preferably not larger than 0.5 mm, and more preferably not larger than 0.2 mm. This is in view of the fact that if the thickness of the graphite sheet is too small, the graphite sheet can easily be damaged; if the thickness is too large, the graphite sheet narrows the interior space of the case 10 that houses the power generation element 20, necessitating a decrease in the capacity (i.e., thickness) of the power generation element 20 that can be housed. These thickness ranges are not only applicable to a graphite sheet, but also a conductive sheet 40 formed from other materials such as conductive tape or metal.

Such a conductive sheet 40 that is more flexible, i.e., more deformable, than the conductive plate allows the pressing force of the conductive plate 30 described above to be conveyed to the power generation element 20 more uniformly, thus preventing damage to the power generation element 20 and also stabilizing electrical connection. As shown in FIG. 6, a conductive sheet 40 may be located between the electrode layer 21 and the bottom 111 of the recessed container 11. This further prevents damage to the power generation element 20 and stabilizes electrical connection.

### (Third Embodiment)

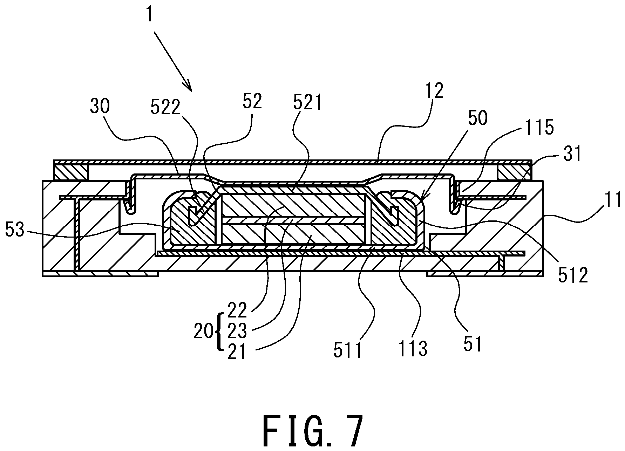

Next, an electrochemical device 1 of a third embodiment will be specifically described with reference to FIG. 7. In connection with the electrochemical device 1 of the present embodiment, the same elements as for the electrochemical devices 1 of the first and second embodiments will basically not be described and only the elements that represent differences from the electrochemical devices 1 of the first and second embodiments will be described.

The electrochemical device 1 of the present embodiment includes a flat element 50 contained in the interior space of the case 10. As shown in FIG. 7, the flat element 50 includes an exterior can (electrode terminal) 51, a seal can (electrode terminal) 52, such a power generation element 20 as described above, and a gasket 53.

The exterior can 51 includes a circular flat portion 511, and a cylindrical side wall 512 that has the shape of a circular cylinder, the cylindrical side wall and the outer periphery of the flat portion 511 being continuously formed. The cylindrical side wall 512 extends generally perpendicularly to the flat portion 511 as seen in longitudinal cross-sectional view. The exterior can 51 is formed from a metal material, such as stainless steel. The exterior can 51 is positioned adjacent to the bottom 111 of the recessed container 11.

The seal can 52 includes a circular flat portion 521, and a peripheral wall 522 having the shape of a circular cylinder, the peripheral wall and the outer periphery of the flat portion 521 being continuously formed. The opening of the seal can 52 faces the opening of the exterior can 51. The seal can 52 is formed from a metal material, such as stainless steel. The seal can 52 is positioned adjacent to the cap 12. The power generation element 20 is housed between the exterior can 51 and seal can 52. Thus, the exterior can 51 functions as an electrode terminal to be connected to the conductor 113, while the seal can 52 functions as another electrode terminal to be connected to the conductive plate 30.

After the power generation element 20 is placed inside the interior space of the exterior can 51 and seal can 52, the exterior can 51 is crimped onto the seal can 52, with a gasket 53 positioned between the cylindrical side wall 512 of the exterior can and the peripheral wall 522 of the seal can. More specifically, the exterior can 51 and seal can 52 are positioned such that their openings face each other, the peripheral wall 522 of the seal can 52 is inserted inside the cylindrical side wall 512 of the exterior 51 and, with a gasket 53 positioned between the cylindrical side wall 512 and the peripheral wall 522, the exterior can 51 is crimped onto the seal can 52. Thus, the interior space formed by the exterior can 51 and seal can 52 is hermetically sealed. Each of the exterior can 51 and seal can 52 is not limited to a circular shape as seen in plan view, and may be varied to be elliptical or polygonal in shape, for example.

The gasket 53 is formed from a resin material such as a polyamide-based resin, a polypropylene resin or a polyphenylenesufide resin. The method of hermetically sealing the interior space defined by the exterior can 51 and seal can 52 is not limited to crimping with a gasket 53 in between, and other methods may be used. For example, the cylindrical side wall 512 of the exterior can 51 and the peripheral wall 522 of the seal can 52 may be joined with a thermofusible resin or an adhesive provided therebetween, and thus sealed.

After the flat element 50 is placed inside the recessed container 11, the conductive plate 30 is laid on the top surface of the flat element 50, and the supported portions 31 are locked to the supports 115 to be supported. At this moment, the conductive plate 30, in contact with the flat surface 521 of the seal can 52, is warped in a direction away from the flat element 50. The conductive plate 30 uses its elastic force to press the flat element 50 toward the bottom 111 of the recessed container 11. This allows the conductive plate 30 to be in more stable contact with the flat element 50 without a positional displacement due to vibration, for example, and, similarly to the electrochemical device 1 of the first embodiment described above, maintains good electrical connection without a positional displacement due to vibration, for example.

Although not shown, in the electrochemical device 1 of the present embodiment, too, such a conductive sheet 40 or conductive film as discussed above may be provided between the flat element 50 and conductive plate 30. Further, a conductive sheet 40 or a conductive film may be provided between the flat element 50 and the bottom 111 of the recessed container 11.

The flat element 50 is not limited to an all-solid-state battery including a solid electrolyte layer, and may be a non-aqueous electrolyte battery such as lithium-ion secondary battery, or any other flat battery, or may be a capacitor such as a lithium-ion capacitor.

### (Variation 1)

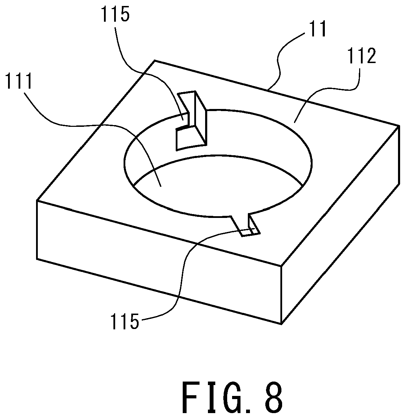

According to the first embodiment described above, the supports 115 are formed to extend radially inward; alternatively, as shown in FIG. 8, the supports 115 may be located at the upper end of the inner peripheral surface of the side wall 112 and extend in a circumferential direction of the inner peripheral surface of the side wall 112. The supports 115 may be ceilings formed in the inner peripheral surface of the side wall 112 and extending radially outward. Each ceiling has an opening through which the associated supported portion (i.e., locking piece) 31 of the conductive plate 30 is to be inserted through the upper end surface of the recessed container 11. The supported portion 31 is inserted into the interior of the associated indentation through the opening of the ceiling. Then, the conductive plate 30 may be rotated in a horizontal direction such that the tip of the sharply bent supported portion 31 comes into abutment with the lower surface of the ceiling. In this manner, the supported portion 31 may be supported by the support 115. In such implementations, the directions of the supported portions 31 of the conductive plate 30 may be modified such that the supported portions can be locked to the supports 115 extending in a circumferential direction. For example, as seen in plan view, the angles of the supported portions 31 shown in FIG. 5 may be displaced by 90 degrees. Although the recessed container 11 includes two supports 115 as shown in FIG. 8, more than two supports 115 may be provided. Supported portions 31 may be provided depending on the number of supports 115.

### (Variation 2)

Alternatively, the supports 115 may be located at the upper end surface of the side wall 112, in lieu of the inner peripheral surface of the side wall 112. For example, although not shown, the supports 115 may be lugs for indentations each having an opening in the upper end surface of the side wall 112 and extending radially inward. In such implementations, the conductive plate 30 may be fixed as each supported portion 31 is inserted into the associated indentation in the upper end surface of the side wall 112. The tip of the supported portion 31 may be supported by the lower surface of the associated support 115 (i.e., lug) extending radially inward or in a circumferential direction, where the conductive plate 30 may be fixed as the supported portion 31 is compressed against an inner side surface of the indentation, where the indentation itself constitutes a support 115. Thus, the conductive plate 30 is not limited to any particular construction, and is only required, with its edge fixed to the side wall 112, to use its elastic force to push the power generation element 20 toward the bottom 111 of the recessed container 11.

In the above-illustrated first to third embodiments, the electrode layer 21 functions as a cathode layer while the electrode layer 22 functions as an anode layer; alternatively, the electrode layer 21 may function as an anode layer while the electrode layer 22 may function as a cathode layer. In such implementations, the external terminal 13 functions as an anode terminal while the external terminal 14 functions as a cathode terminal.

In the above-illustrated third embodiment, the flat element 50 is housed in the interior space of the case 10 such that the exterior can 51 is located adjacent to the bottom 111 of the recessed container 11; alternatively, the flat element may be housed such that the seal can 52 is located adjacent to the bottom 111 of the recessed container 11. In other words, the flat element 50 may be housed in the interior space of the case 10 in such a manner that the flat element 50 shown in FIG. 6 has been flipped over.

### (Variation 3)

In the above-illustrated first and second embodiments, the power generation element 20 is constituted by a laminate having an electrode layer 21, electrode layer 22 and solid electrolyte layer 23 laminated together; alternatively, the solid electrolyte layer 23 may be replaced by a separator (not shown) to provide a separation layer, and an electrolytic solution, together with the power generation element 20, may be contained in the interior space of the case 10 such that the electrochemical device is implemented as a lithium-ion secondary battery, lithium-ion capacitor, or electric double-layer capacitor, for example. In such implementations, the separator and electrolytic solution may be ones typically used in lithium-ion secondary batteries, lithium-ion capacitors, or electric double-layer capacitors, for example. Further, the electrode layers 21 and 22 may be replaced by cathode and anode mixture layers typically used in various electrochemical devices 1.

Although embodiments have been described, the present disclosure is not limited to the above-illustrated embodiments, and various modifications are possible without departing from the spirit of the disclosure.

### EXAMPLES

### [Evaluation of Vibration Resistance]

A conductive plate made of SUS304-CSP with a thickness of 0.1 mm was used in fabricating an electrochemical device (i.e., all-solid-state battery) shown in FIG. 1. Vibration testing was conducted on the electrochemical device of this inventive example to evaluate vibration resistance in the following manner.

The testing was conducted by applying sine-wave vibrations to the electrochemical device of the inventive example in three directions, namely, the length, width and height directions of the device in this order. A sweep with a sine wave was a logarithm sweep with varying frequency in a reciprocal manner in the range of 7 Hz to 200 Hz, where one cycle lasted 15 minutes, and such a sweep was repeated 12 times for each of the three directions. Sweeping was done such that peak acceleration was maintained at 1 G in the range of 7 Hz to 18 Hz; from 18 Hz onward, sweeping was done up to a frequency in which peak acceleration reached 8G (approximately 50 Hz) while maintaining the total amplitude at 0.8 mm; then, up to 200 Hz, sweeping was done such that peak acceleration was maintained at 1G.

The AC impedance of the electrochemical device of the inventive example after the vibration testing was measured at 1kHz with an applied voltage of 10 mV, and compared with the AC impedance measured before the vibration testing; no change was observed, demonstrating that good electrical connection was maintained by the conductive plate locked to the side wall of the recessed container.

For comparison, a comparative example of an electrochemical device was fabricated where the conductive plate was not locked to the side wall of the recessed container and the conductive plate was fixed, using a conductive adhesive, to a conductive path formed in the side wall of the recessed container to establish conduction to the conductive path. The comparative example was evaluated in the same manner as the above-described inventive example; in the electrochemical device of the comparative example, an increase in impedance (not less than 60 %) was observed after vibration testing, which shows that it failed to maintain good electrical connection.

### REFERENCE SIGNS LIST

1: electrochemical device
10: case
11: recessed container
12: cap
13: external terminal
14: external terminal
15: seal ring
111: bottom
112: side wall
113: conductor
114: conductor
115: supports
20: power generation element
30: conductive plate
31: supported portions
32: recessed portion
33: stepped portion
40: conductive sheet
50: flat element
51: exterior can
511: flat portion
52: seal can
521: flat portion
53: gasket

## Claims

1. An electrochemical device comprising:
a case including a recessed container having a bottom and a side wall, and a cap adapted to cover an opening of the recessed container;
a power generation element sealed in the case and including a first electrode layer located adjacent to the bottom, a second electrode layer located adjacent to the cap, and a separation layer located between the first electrode layer and the second electrode layer; and
a conductive plate positioned between the power generation element and the cap,
wherein:
the first electrode layer is electrically connected to a first conductive path running from an inside of the case to an outside of the case;
the second electrode layer is electrically connected, via the conductive plate, to a second conductive path running from the inside of the case to the outside of the case;
the conductive plate has an edge to be fixed to a side wall of the recessed container;
the power generation element is pushed by the conductive plate toward the bottom of the recessed container; and
a clearance is provided between the conductive plate and the cap.

2. The electrochemical device according to claim 1, wherein the conductive plate includes: the edge to be fixed to the side wall of the recessed container; a planar bottom portion having a flat surface facing the power generation element and adapted to push the power generation element toward the bottom of the recessed container; and a stepped portion displaced from the planar bottom portion in a thickness direction.

3. The electrochemical device according to claim 1, wherein:
the recessed container includes a plurality of supports on the side wall;
the edge of the conductive plate includes a plurality of supported portions corresponding to the respective supports; and
each of the supported portions is fixed to the associated support.

4. The electrochemical device according to claim 3, wherein:
each of the supports of the recessed container is a lug formed on the inner peripheral surface of the side wall; and
each of the supported portions of the conductive plate is a being locked to piece extending from the edge of the conductive plate to be capable of being locked to a lower surface of the associated lug.

5. The electrochemical device according to claim 1, wherein the separation layer is a solid electrolyte layer containing a sulfide-based solid electrolyte.

6. The electrochemical device according to any one of claims 1 to 5, further comprising:
a conductive sheet located between the planar bottom portion of the conductive plate and the power generation element.

7. An electrochemical device comprising:
a case including a recessed container having a bottom and a side wall, and a cap adapted to cover an opening of the recessed container;
a flat element sealed in the case and including an exterior member having a first electrode terminal located adjacent to the bottom and a second electrode terminal located adjacent to the cap, and a power generation element encapsulated in an interior of the exterior member and having a first electrode layer, a second electrode layer and a separation layer located between the first electrode layer and the second electrode layer; and
a conductive plate positioned between the flat element and the cap,
wherein:
the first electrode terminal is electrically connected to a first conductive path running from an inside of the case to an outside of the case;
the second electrode terminal is electrically connected, via the conductive plate, to a second conductive path running from the inside of the case to the outside of the case;
the conductive plate has an edge to be fixed to the side wall of the recessed container;
the flat element is pushed by the conductive plate toward the bottom of the recessed container; and
a clearance is provided between the conductive plate and the cap.

8. The electrochemical device according to claim 7, wherein the conductive plate includes: the edge to be fixed to the side wall of the recessed container; a planar bottom portion having a flat surface facing the flat element and adapted to push the flat element toward the bottom of the recessed container; and a stepped portion displaced from the planar bottom portion in a thickness direction.

9. The electrochemical device according to claim 7, wherein:
the recessed container includes a plurality of supports on the side wall;
the edge of the conductive plate includes a plurality of supported portions corresponding to the respective supports; and
each of the supported portions is fixed to the associated support.

10. The electrochemical device according to claim 7, wherein:
each of the supports of the recessed container is a lug formed on the inner peripheral surface of the side wall; and
each of the supported portions of the conductive plate is a locking piece extending from the edge of the conductive plate to be capable of being locked to a lower surface of the associated lug.

11. The electrochemical device according to claim 7, wherein:
the separation layer is a solid electrolyte layer containing a sulfide-based solid electrolyte; and
the flat element is an all-solid-state battery.

12. The electrochemical device according to any one of claims 7 to 11, further comprising:
a conductive sheet located between the planar bottom portion of the conductive plate and the flat element.
